# EUROPÄISCHE PATENTSCHRIFT

(11) **EP 3 074 253 B1**
(45) Veröffentlichungstag und Bekanntmachung des Hinweises auf die Patenterteilung: **16.06.2021**
(21) Anmeldenummer: 14781207.7
(22) Anmeldetag: 07.10.2014
(51) Int. Cl.: B60J 3/02, B60J 3/04

(54) **VERFAHREN ZUM BETRIEB EINES BLENDSCHUTZSYSTEMS FÜR EIN FAHRZEUG**
METHOD FOR OPERATING AN ANTI-GLARE SYSTEM FOR A VEHICLE
PROCÉDÉ POUR FAIRE FONCTIONNER UN SYSTÈME ANTI-ÉBLOUISSEMENT DESTINÉ À UN VÉHICULE AUTOMOBILE

(30) Priorität: 25.11.2013 DE 102013223991
(43) Veröffentlichungstag der Anmeldung: 05.10.2016
(73) Patentinhaber: Robert Bosch GmbH, 70442 Stuttgart (DE)
(72) Erfinder: TRINH, Hoang, 70839 Gerlingen (DE)
(86) Internationale Anmeldenummer: PCT/EP2014/071441
(87) Internationale Veröffentlichungsnummer: WO 2015/074797

(56) Entgegenhaltungen:
- EP-A2- 1 683 668
- DE-A1-102005 007 427
- JP-A- 2003 260 933
- JP-A- 2008 189 253
- US-A1- 2001 029 416
- US-A1- 2013 146 234

## Beschreibung

Die Erfindung bezieht sich auf ein Verfahren zum Betrieb eines Blendschutzsystems für ein Fahrzeug.

### Stand der Technik

In der WO 2005/014319 A1 wird ein Blendschutzsystem für ein Fahrzeug beschrieben, das eine Abblendungsvorrichtung zur Abdunkelung des Fahrzeuginnenraums in Abhängigkeit externer Lichteinflüsse aufweist. Das Blendschutzsystem umfasst einen Bild gebenden Sensor im Fahrzeuginnenraum, über den die Kopfhaltung und die Augenposition eines Fahrzeuginsassen erfasst werden können. Aus dem aufgenommenen Bild wird die Lichtintensität auf dem Gesicht des Fahrzeuginsassen ermittelt, so dass auf den Einsatz von Fotozellen zur Messung der Helligkeit verzichtet werden kann. In Abhängigkeit der Lichtintensität und der Einstrahlungsrichtung wird elektrochromatisches Glas in den Fahrzeugscheiben angesteuert, um den Fahrzeuginnenraum zu verdunkeln.

Die DE 10 2005 007 427 A1 offenbart eine elektrische Sonnenblende für ein Kraftfahrzeug. Eine Transparenz zumindest eines Segmentes einer Fensterscheibe ist einstellbar in Abhängigkeit von einer Augenlidstellung und/oder einer Pupillengröße eines Insassen des Kraftfahrzeuges. Die US 2013/0146234 A1 offenbart ein Gerät zum Verhindern, dass einfallende Strahlen in einen Innenraum eines Fahrzeugs eindringen. Die JP 2003 260933 A offenbart ein Gerät zur automatischen Kontrolle von Blendung bei einem Fahrzeug. Die JP 2008 189253 A offenbart ein Anti-Blendungsgerät für ein Fahrzeug.

Die EP 1 683 668 A2 befasst sich mit einem Fenstersystem mit einer variablen Lichtdurchlässigkeit für ein Fahrzeug. Die Lichtdurchlässigkeit kann ansprechend auf das Erkennen einer sich außerhalb des Fahrzeugs befindlichen Lichtquelle angepasst werden. Die US 2001/0029416 A1 befasst sich mit einer Abdunkelung einer Windschutzscheibe um einen Fahrer eines Fahrzeugs vor einer Blendung durch Sonnenlicht oder Scheinwerfer eines anderen Fahrzeugs zu schützen.

### Offenbarung der Erfindung

Der Erfindung liegt die Aufgabe zugrunde, den Blendschutz in Fahrzeugen zu verbessern.

Diese Aufgabe wird erfindungsgemäß mit den Merkmalen des Anspruches 1 gelöst. Die Unteransprüche geben zweckmäßige Weiterbildungen an.

Das Blendschutzsystem kann in Fahrzeugen eingesetzt werden, um einen Blendschutz für den Fahrer oder einen weiteren Fahrzeuginsassen zu realisieren. Das Blendschutzsystem umfasst zu diesem Zweck eine Videoerfassungseinrichtung, die auf den Kopf eines Fahrzeuginsassen gerichtet ist, eine Auswertungseinrichtung zur Auswertung der aufgenommenen Signale und mindestens eine Abblendungsvorrichtung, über die der Fahrzeuginnenraum zumindest teilweise abgedunkelt werden kann. Diese Einrichtungen bzw. Vorrichtungen genügen grundsätzlich, um den Fahrer oder einen weiteren Fahrzeuginsassen vor einer Blendung durch von außen in den Fahrzeuginnenraum einfallendes Licht zu schützen. Die auf den Kopf eines Fahrzeuginsassen gerichtete Videoerfassungseinrichtung erzeugt ein optisches Signal des Kopfes oder zumindest eines Teils des Kopfes, das in der Auswertungseinrichtung analysiert wird, woraufhin in der Auswertungseinrichtung ein Stell- bzw. Steuersignal zur Ansteuerung der Abblendungsvorrichtung generiert wird. Die Abblendungsvorrichtung wird so angesteuert, dass eine Blendung des Fahrzeuginsassen vermieden oder zumindest reduziert wird.

Bei dem Verfahren zum Betrieb des Blendschutzsystems wird über die Videoerfassungseinrichtung der Kopf oder ein Teil des Kopfes eines Fahrzeuginsassen aufgenommen und das aufgenommene Bild mit einem für eine Blendung typischen Reaktionsmuster verglichen. Hierbei handelt es sich um natürliche, spontane körperliche Reaktionen auf eine hohe Lichtintensität, die unabhängig von der betreffenden Person als typisches Reaktionsmuster vorliegen. Die Reaktionsmuster können in einer Datenbank hinterlegt werden und dienen zum Abgleich mit den aktuell aufgenommenen Bildern der Videoerfassungseinrichtung. Ergibt der Vergleich, dass das aktuell aufgenommene Bild des Kopfes oder Kopfteils mit dem für die Blendung typischen Reaktionsmuster vollständig oder zumindest weitgehend übereinstimmt, liegt eine Blendung des Fahrzeuginsassen vor, woraufhin Gegenmaßnahmen getroffen werden können, insbesondere die Abblendungsvorrichtung zum zumindest teilweisen Abdunkeln des Fahrzeuginnenraums betätigt wird.

Die Reaktion des Fahrzeuginsassen lässt auf die Lichtintensität schließen. Zusätzlich oder alternativ kann aus der Ausrichtung der Videoerfassungseinrichtung im Fahrzeuginnenraum auf die Blendrichtung geschlossen werden, so dass zusätzlich oder alternativ zur Lichtintensität auch eine Information über die Richtung des Lichteinfalls in den Fahrzeuginnenraum vorliegt. Dementsprechend ist es möglich, gezielte Abblendungsmaßnahmen durch Betätigung der Abblendungsvorrichtung zu ergreifen und beispielsweise nur diejenigen Fahrzeugscheiben abzudunkeln, über die der erhöhte Lichteinfall von außen in den Fahrzeuginnenraum erfolgt. Es wird somit der Fahrzeuginnenraum nur so weit abgedunkelt, wie dies für die Minimierung der Blendung erforderlich ist. Diejenigen Fahrzeugscheiben, über die kein erhöhter Lichteinfall erfolgt, müssen dagegen nicht über die Abblendungsvorrichtung abgedunkelt werden.

Es genügt grundsätzlich, die Blendungsintensität allein aus der Reaktion des Kopfes bzw. eines Kopfteiles festzustellen und entsprechende Abblendungsmaßnahmen zu ergreifen. Gleichwohl kann es aber auch vorteilhaft sein, zusätzlich die Helligkeit im Fahrzeuginnenraum und/oder in der Umgebung des Fahrzeuges zu messen, insbesondere über Helligkeitssensoren, so dass eine zusätzliche Information über die aktuell im Fahrzeuginnenraum herrschende Helligkeit vorliegt. Hierbei kann gegebenenfalls zusätzlich zur Lichtintensität auch die Richtung des Lichteinfalls bestimmt werden. Die gemessene Helligkeit wird zusätzlich zu den Informationen aus der Videoerfassungseinrichtung berücksichtigt und kann gegebenenfalls für eine präzisere Bestimmung der Lichtintensität und Blendungsrichtung herangezogen werden.

Des Weiteren ist es möglich, eine Umfeldkamera einzusetzen, mit der insbesondere der vorausliegende Bereich des Fahrzeuges mit entgegenkommenden Drittfahrzeugen erfasst werden kann. Über die Umfeldkamera kann das Scheinwerferlicht entgegenkommender Fahrzeuge im Hinblick auf die Intensität und den Einfallswinkel erfasst werden, was eine zusätzliche Information im Hinblick auf die Blendung des Fahrers darstellt, woraufhin entsprechende Gegenmaßnahmen durch Aktivierung der Abblendungsvorrichtung ergriffen werden können.

Über die Videoerfassungseinrichtung im Fahrzeug, die Bestandteil des Blendschutzsystems ist, kann beispielsweise die Kopfpose bzw. -haltung, die Augenpositionen, die Augenlidbewegung bzw. -öffnung und die Pupillengröße eines Fahrzeuginsassen erfasst werden. Gegebenenfalls kann auch zusätzlich ein weiterer Körperteil, vorzugsweise ein Arm und/oder eine Hand eines Fahrzeuginsassen, über die Videoerfassungseinrichtung aufgenommen und mit einem zugeordneten Reaktionsmuster verglichen werden. Sowohl beim Kopf bzw. einem Kopfteil wie den Augen oder den Augenlidern als auch einem Arm oder einer Hand des Fahrzeuginsassen treten im Fall einer Blendung typische Abwehrreaktionen auf wie zum Beispiel ein Abwenden des Kopfes bzw. der Augen, das schnelle, teilweise Schließen der Augenlider mit einer hierdurch bedingten Verengung der Augenlidöffnung, ein Blinzeln, eine plötzliche Reduzierung der Pupillengröße bzw. ein Heben des Armes oder der Hand zum Abschirmen der Augen. Eine derartige Reaktion kann mit einem hinterlegten Reaktionsmuster abgeglichen werden, wobei im Falle einer hinreichenden Übereinstimmung eine Gegenmaßnahme durch Aktivierung der Abdunkelungsvorrichtung durchgeführt wird.

Als Abblendungsvorrichtung kommen beispielweise aktiv steuerbare Vorrichtungen zur Verdunkelung bzw. Abschirmung des Fahrzeuginnenraums bzw. eines Teils des Fahrzeuginnenraums in Betracht. Gemäß vorteilhafter Ausführung ist die Abblendungsvorrichtung als eine elektrochromatische Fahrzeugscheibe oder mit Suspended Particle Devices (SPD), Polymere Dispersed Liquid Crystal oder Micro Blinds versehene Fahrzeugscheibe ausgeführt, bei der der Lichteinfall durch Anlegen einer Spannung eingestellt werden kann. Vorteilhafterweise ist zumindest die Windschutzscheibe elektrochromatisch oder in einer weiteren vorgenannten Weise ausgeführt, gegebenenfalls zusätzlich oder alternativ eine oder mehrere der weiteren Scheiben oder sämtliche Fahrzeugscheiben. Des Weiteren ist es möglich, das Spiegelglas im Innen- und/oder Außenrückspiegel elektrochromatisch auszuführen, um einem Blenden durch einen reflektierten Lichtstrahl aktiv entgegenwirken zu können.

Des Weiteren kommen auch Abblendungsvorrichtungen in Betracht, welche nicht in eine Fahrzeugscheibe integriert sind, sondern separat von den Fahrzeugscheiben ausgeführt sind, beispielsweise Rollos vor den Scheiben, wobei der Öffnungswinkel der Lamellen des Rollos über Signale der Auswertungseinrichtung eingestellt werden kann.

Im Falle aktiv ansteuerbarer Abblendungsvorrichtungen, insbesondere bei elektrochromatischen Fahrzeugscheiben, sind diese vorteilhafterweise in einzelne, ansteuerbare Segmente unterteilt, so dass nicht notwendigerweise die gesamte Fahrzeugscheibe den gleichen Abdunklungsgrad aufweisen muss, sondern verschiedene Segmente der Scheibe unterschiedlich stark abgedunkelt werden können. Dies ermöglicht es, gezielt nur diejenigen Teile einer Fahrzeugscheibe abzudunkeln, durch die das den Fahrzeuginsassen blendende Licht einfällt.

Es können gegebenenfalls mehrere Videoerfassungseinrichtungen im Fahrzeug vorgesehen sein, um einen Fahrzeuginsassen aus verschiedenen Blickwinkeln und/oder mehrere Fahrzeuginsassen gleichzeitig aufnehmen zu können. Vorteilhafterweise wird über die mindestens eine Videoerfassungseinrichtung zumindest der Kopfbereich des Fahrers aufgenommen. Gegebenenfalls kann auch der Kopfbereich eines weiteren Fahrzeuginsassen oder des Fahrers und auch mindestens eines weiteren Fahrzeuginsassen aufgenommen werden.

Aus einem Vergleich der lokalen Helligkeitsverteilung kann ggf. auch auf eine Blendung geschlossen werden. Es ist eine Aufteilung der Bildregionen, zum Beispiel des Gesichtsbereichs und des Augenbereichs in kleinere Zellen möglich, um ein Helligkeitsmaß bzw. den Kontrasts zu berechnen. Um eine unabsichtliche Blendung zu detektieren, kann ein globaler mittlerer Helligkeitswert oder ein mittlerer Helligkeitswert aus bestimmten festgelegten bzw. zufällig festgesetzten Bildregionen verwendet werden, die außerhalb des Bildbereichs des Gesichts liegen. Der mittlere Helligkeitswert bzw. Kontrastwert kann zur Plausibilisierung eingesetzt werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Fahrzeuginnenraums mit einem Blendschutzsystem, das eine auf den Kopf des Fahrers gerichtete Videoerfassungseinrichtung, eine Auswertungseinrichtung sowie eine Abblendungsvorrichtung umfasst,
- Fig. 2: der Fahrzeuginnenraum mit verschiedenen Kameras der Videoerfassungseinrichtung.

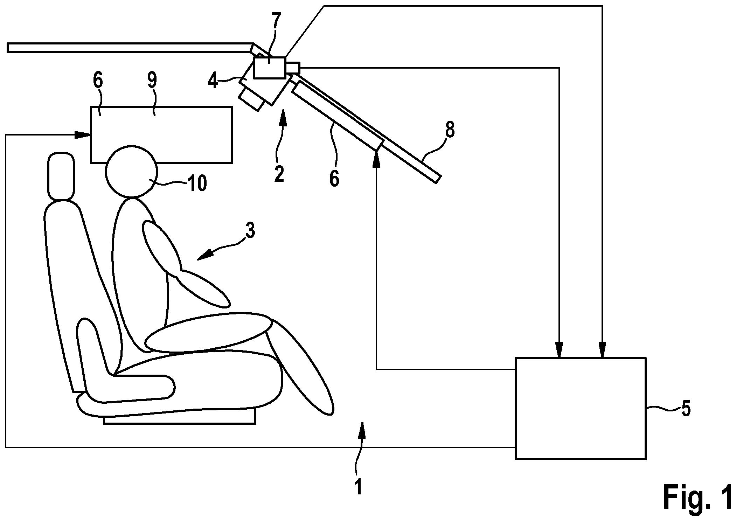

In Fig. 1 ist in schematischer Weise der Fahrzeuginnenraum 1 eines Kraftfahrzeugs dargestellt, wobei in das Fahrzeug ein Blendschutzsystem 2 integriert ist, mit dem ein Blenden eines Fahrzeuginsassen 3 durch einen starken Lichteinfall von außen vermieden oder zumindest reduziert werden soll. Bei dem Fahrzeuginsassen 3 handelt es sich insbesondere um den Fahrer; mithilfe des Blendschutzsystems 2 können aber auch weitere Fahrzeuginsassen bzw. Mitfahrer im Fahrzeug vor einem Blenden durch einfallendes Licht von außen geschützt werden.

Das Blendschutzsystem 2 umfasst eine oder mehrere Innenraumkameras 4, die insgesamt eine Videoerfassungseinrichtung bilden, eine Auswertungseinrichtung bzw. ein Steuergerät 5 sowie eine oder mehrere Abblendungsvorrichtungen 6, die in die Windschutzscheibe 8 bzw. in eine oder mehrere Seitenscheiben 9, in die Heckscheibe bzw. gegebenenfalls in das Glas von Innen- bzw. Außenspiegeln integriert sind. Das Blendschutzsystem 2 kann des Weiteren eine Umfeldkamera 7 umfassen, welche im Ausführungsbeispiel als Frontkamera ausgeführt ist und den vor dem Fahrzeug liegenden Bereich erfasst.

Die Innenraumkameras der Videoerfassungseinrichtung 4 sind auf den Kopf 10 des Fahrzeuginsassen 3 gerichtet und nehmen ein Bild des Gesichtes einschließlich der Augenpartie und der Mundpartie auf. Aus dem Bild der Videoerfassungseinrichtung 4 kann auch die Kopfpose bzw. -haltung und die Blickrichtung der Augen ermittelt werden. Des Weiteren ist es möglich, die Pupillengröße zu erfassen.

Über die Videoerfassungseinrichtung 4 werden fortlaufend Bilder vom Kopf 10 aufgenommen und als Eingangssignale der Auswertungseinrichtung 5 zugeführt, in der die Auswertung und gegebenenfalls die Erzeugung von Stellsignalen erfolgt. In der Auswertungseinrichtung 5 werden die aufgenommenen Bilder des Kopfes 10 mit für eine Blendung typischen Reaktionsmustern verglichen, die jeweils einem Part des Kopfes 10 zugeordnet und typisch für eine Reaktion des Fahrzeuginsassen im Falle einer Blendung sind. Zu den typischen Reaktionsmustern gehört ein Zusammenkneifen der Augenlider, ein Zucken des Mundwinkels und der Augenbrauen, ein plötzliches Abwenden des Blicks, eine plötzliche Änderung der Kopfhaltung, eine plötzliche Verkleinerung der Pupillengröße etc. Auch kann eine typische Abwehrreaktion mit dem Arm oder der Hand berücksichtigt werden, beispielsweise ein Abschirmen des Augenbereichs mit der Hand.

Wird bei der Auswertung in der Einrichtung 5 festgestellt, dass die aufgenommenen Bilder des Kopfes 10 mit hinreichender Genauigkeit mit einem oder mehreren hinterlegten Reaktionsmustern übereinstimmen, wird ein Stellsignal erzeugt, das zur Einstellung der Abblendungsvorrichtung 6 zugeführt wird. Bei der Abblendungsvorrichtung 6 handelt es sich vorzugsweise um eine elektrochromatische Scheibe oder um eine mit Suspended Particle Devices (SPD), Polymere Dispersed Liquid Crystal oder Micro Blinds versehene Fahrzeugscheibe des Fahrzeugs, die durch Anlegen einer elektrischen Spannung abgedunkelt werden kann. Vorteilhafterweise ist die Scheibe in einzelne elektrochromatische Segmente unterteilt, die unabhängig voneinander ansteuerbar sind, so dass nicht die gesamte Scheibe abgedunkelt werden muss, sondern lediglich Teilbereiche der Scheibe.

Über die Front- bzw. Umfeldkamera 7 kann eine zusätzliche Information über den Einfallswinkel der von außen einstrahlenden Lichtquelle berücksichtigt werden, so dass mit hoher Genauigkeit das Segment in der Windschutzscheibe angesteuert und zur Abdunkelung aktiviert werden kann.

Im Ausführungsbeispiel gemäß Fig. 1 ist die Abblendungsvorrichtung 6 aufgrund der Ausführung als elektrochromatische Scheibe in die Fahrzeugscheibe integriert. Es ist aber auch eine Ausführung als separates Bauteil möglich, das jedoch im Lichteinfallsbereich liegt und durch Ansteuerung verdunkelt werden kann, beispielsweise in Form eines Rollos an der Innenseite einer Fahrzeugscheibe oder als elektrochromatische Scheibe, die vor einer Fahrzeugscheibe angeordnet ist.

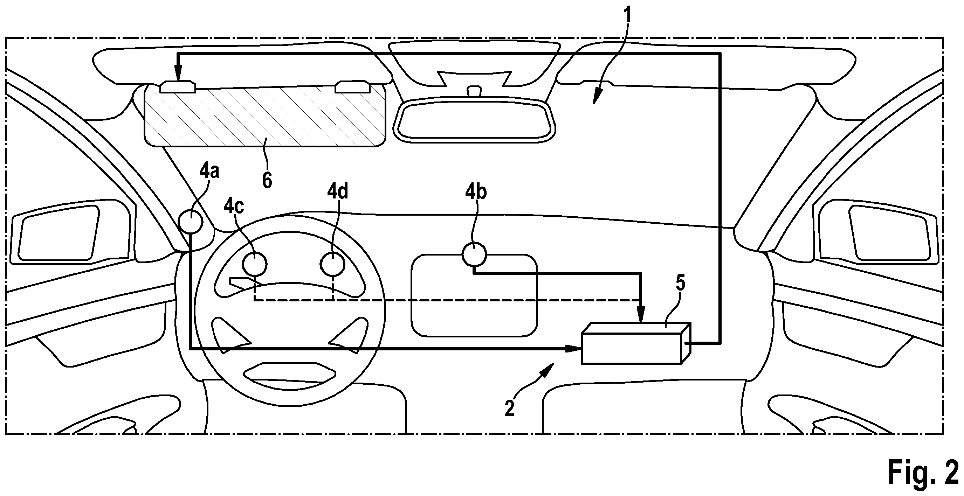

In Fig. 2 ist der Fahrzeuginnenraum 1 eines Fahrzeugs mit verschiedenen Kameras 4a, 4b, 4c, 4d der Videoerfassungseinrichtung dargestellt. Die Kameras, welche auf den Kopf des Fahrers gerichtet sind, befinden sich beispielsweise als Kamera 4a an der A-Säule, als Kamera 4b am mittleren Bereich des Armaturenbretts oder als Kameras 4c und 4d am Armaturenbrett unmittelbar unterhalb des Lenkrades.

Die Abblendungsvorrichtung 6 ist beim Ausführungsbeispiel des Blendschutzsystems 2 gemäß Fig. 2 separat von der Frontscheibe ausgeführt und als Sichtschutzklappe oberhalb des Fahrersitzes ausgebildet, die zwischen einer unmittelbar am Dachhimmel anliegenden Position und einer heruntergeklappten Position verstellbar ist. Die Sichtschutzklappe kann als elektrochromatische Scheibe ausgeführt sein, deren Verdunkelungsgrad durch Anlegen einer elektrischen Spannung über Stellsignale der Auswertungseinrichtung 5 steuerbar ist.

## Patentansprüche

1. Verfahren zum Betrieb eines Blendschutzsystems (1) für ein Fahrzeug, mit einer auf den Kopf (10) eines Fahrzeuginsassen (3) gerichteten Videoerfassungseinrichtung (4), mit einer Auswertungseinrichtung (5) zur Auswertung aufgenommener Signale und mit mindestens einer Abblendungsvorrichtung (6) zur mindestens teilweisen Abdunkelung des Fahrzeuginnenraums (1), wobei aus einem Vergleich des über die Videoerfassungseinrichtung (4) aufgenommenen Bildes des Kopfes (10) oder eines Kopfteiles mit einem für eine Blendung typischen Reaktionsmuster auf die den Fahrzeuginsassen (3) betreffende Blendungsintensität bzw. -richtung geschlossen wird, **dadurch gekennzeichnet, dass** aus dem Kontrast vom Gesichtsbereich zum Augenbereich auch auf eine Blendung geschlossen wird.

2. Verfahren nach Anspruch 1, **dadurch gekennzeichnet, dass** der Kopf (10) oder ein Kopfteil des Fahrzeuginsassen (3) über die Videoerfassungseinrichtung (4) erfasst und mit einem zugeordneten Reaktionsmuster verglichen wird.

3. Verfahren nach Anspruch 2, **dadurch gekennzeichnet, dass** die Kopfpose des Fahrzeuginsassen (3) über die Videoerfassungseinrichtung (4) erfasst wird.

4. Verfahren nach Anspruch 2 oder 3, **dadurch gekennzeichnet, dass** die Augenposition des Fahrzeuginsassen (3) über die Videoerfassungseinrichtung (4) erfasst wird.

5. Verfahren nach einem der Ansprüche 2 bis 4, **dadurch gekennzeichnet, dass** die Augenlidbewegung des Fahrzeuginsassen (3) über die Videoerfassungseinrichtung (4) erfasst wird.

6. Verfahren nach einem der Ansprüche 2 bis 5, **dadurch gekennzeichnet, dass** die Pupillengröße des Fahrzeuginsassen (3) über die Videoerfassungseinrichtung (4) erfasst wird.

7. Verfahren nach einem der Ansprüche 1 bis 6, **dadurch gekennzeichnet, dass** der Arm oder die Hand des Fahrzeuginsassen (3) über die Videoerfassungseinrichtung (4) erfasst und mit einem zugeordneten Reaktionsmuster verglichen wird.

8. Verfahren nach einem der Ansprüche 1 bis 7, **dadurch gekennzeichnet, dass** die Helligkeit im Fahrzeuginnenraum (1) und/oder in der Umgebung gemessen wird.

9. Verfahren nach einem der Ansprüche 1 bis 8, **dadurch gekennzeichnet, dass** die Position von Scheinwerfern eines entgegenkommenden Fahrzeugs ermittelt wird.

10. Blendschutzsystem (2) zur Durchführung des Verfahrens nach einem der Ansprüche 1 bis 9.

11. Blendschutzsystem (2) nach Anspruch 10, **dadurch gekennzeichnet, dass** die Abblendungsvorrichtung (6) als eine elektrochromatische Fahrzeugscheibe (8, 9), mit Suspended Particle Devices (SPD), Polymere Dispersed Liquid Crystal oder Micro Blinds versehene Fahrzeugscheibe ausgeführt ist.

## Claims

1. Method for operating a glare protection system (1) for a vehicle, having a video capturing device (4) that is aimed at the head (10) of a vehicle occupant (3), having an evaluation device (5) for evaluating recorded signals, and having at least one screening apparatus (6) for at least partially darkening the vehicle interior (1), wherein the glare intensity or glare direction that is relevant to the vehicle occupant (3) is deduced from a comparison of the image of the head (10) or of a head part recorded via the video capturing device (4) with a reaction pattern that is typical for glare, **characterized in that** glare is also deduced from the contrast of the face region to the eye region.

2. Method according to Claim 1, **characterized in that** the head (10) or a head part of the vehicle occupant (3) is captured via the video capturing device (4) and compared to an assigned reaction pattern.

3. Method according to Claim 2, **characterized in that** the head pose of the vehicle occupant (3) is captured via the video capturing device (4).

4. Method according to Claim 2 or 3, **characterized in that** the position of the vehicle occupant (3) is captured via the video capturing device (4).

5. Method according to one of Claims 2 to 4, **characterized in that** the eyelid movement of the vehicle occupant (3) is captured via the video capturing device (4) .

6. Method according to one of Claims 2 to 5, **characterized in that** the pupil size of the vehicle occupant (3) is captured via the video capturing device (4) .

7. Method according to one of Claims 1 to 6, **characterized in that** the arm or the hand of the vehicle occupant (3) is captured via the video capturing device (4) and compared to an assigned reaction pattern.

8. Method according to one of Claims 1 to 7, **characterized in that** the brightness in the vehicle interior (1) and/or in the environment is measured.

9. Method according to one of Claims 1 to 8, **characterized in that** the position of headlights of an oncoming vehicle is ascertained.

10. Glare protection system (2) for carrying out the method according to one of Claims 1 to 9.

11. Glare protection system (2) according to Claim 10, **characterized in that** the screening apparatus (6) takes the form of an electrochromic vehicle window (8, 9), a vehicle window having suspended particle devices (SPD), a vehicle window having having polymer-dispersed liquid crystals or a vehicle window having micro blinds.

## Revendications

1. Procédé de fonctionnement d'un système anti-éblouissement (1) destiné à un véhicule, comprenant un dispositif de détection vidéo (4) dirigé vers la tête (10) d'un occupant de véhicule (3), un dispositif d'évaluation (5) destiné à évaluer des signaux enregistrés et au moins un dispositif de tamisage (6) destiné à assombrir au moins partiellement l'espace intérieur (1) du véhicule, l'intensité ou la direction de l'éblouissement relative à l'occupant (3) du véhicule étant déduite à partir d'une comparaison de l'image de la tête (10) ou d'une partie de tête enregistrée par le biais du dispositif de détection vidéo (4) à un motif de réaction typique de l'éblouissement, **caractérisé en ce qu'**un éblouissement est également déduit à partir du contraste entre la zone du visage et la zone des yeux.

2. Procédé selon la revendication 1, **caractérisé en ce que** la tête (10) ou une partie de tête de l'occupant (3) du véhicule est détectée par le biais du dispositif de détection vidéo (4) et comparée à un motif de réaction associé.

3. Procédé selon la revendication 2, **caractérisé en ce que** la pose de tête de l'occupant (3) du véhicule est détectée par le biais du dispositif de détection vidéo (4).

4. Procédé selon la revendication 2 ou 3, **caractérisé en ce que** la position des yeux de l'occupant (3) du véhicule est détectée par le biais du dispositif de détection vidéo (4).

5. Procédé selon l'une des revendications 2 à 4, **caractérisé en ce que** le mouvement des paupières de l'occupant (3) du véhicule est détecté par le biais du dispositif de détection vidéo (4).

6. Procédé selon l'une des revendications 2 à 5, **caractérisé en ce que** la taille de la pupille de l'occupant (3) du véhicule est détectée par le biais du dispositif de détection vidéo (4).

7. Procédé selon l'une des revendications 1 à 6, **caractérisé en ce que** le bras ou la main de l'occupant (3) du véhicule est détecté (e) par le biais du dispositif de détection vidéo (4) et comparé(e) à un motif de réaction associé.

8. Procédé selon l'une des revendications 1 à 7, **caractérisé en ce que** la luminosité dans l'espace intérieur (1) du véhicule et/ou dans l'environnement est mesurée.

9. Procédé selon l'une des revendications 1 à 8, **caractérisé en ce que** la position des phares d'un véhicule venant en sens inverse est déterminée.

10. Système anti-éblouissement (2) destiné à mettre en œuvre le procédé selon l'une des revendications 1 à 9.

11. Système anti-éblouissement (2) selon la revendication 10, **caractérisé en ce que** le dispositif de tamisage (6) est réalisé sous la forme d'une vitre de véhicule électrochromatique (8, 9) comprenant des dispositifs à particules en suspension (SPD), d'une vitre de véhicule pourvue de cristaux liquides dispersés en polymère ou d'une vitre de véhicule pourvue de micro-stores.
